# EUROPÄISCHE PATENTSCHRIFT

(11) **EP 0 531 773 B1**
(45) Veröffentlichungstag und Bekanntmachung des Hinweises auf die Patenterteilung: **05.06.1996**
(21) Anmeldenummer: 92114270.9
(22) Anmeldetag: 21.08.1992
(51) Int. Cl.: B41F 35/00, B01D 17/025, C23G 5/04

(54) **Vorrichtung zum Waschen eines Zylinders einer Druckmaschine**
Device for cleaning a cylinder of a printing machine
Dispositif pour le nettoyage d'un cylindre d'une machine à imprimer

(30) Priorität: 03.09.1991 DE 4129189
(43) Veröffentlichungstag der Anmeldung: 17.03.1993
(73) Patentinhaber: MAN Roland Druckmaschinen AG, 63012 Offenbach (DE)
(72) Erfinder: Dürrnagel, Klaus, W-6204 Taunusstein-Bleidenstadt (DE)
(74) Vertreter: Marek, Joachim, Dipl.-Ing.

(56) Entgegenhaltungen:
- EP-A- 0 186 193
- EP-A- 0 419 289
- DE-A- 3 721 293
- US-A- 4 317 720
- US-A- 4 534 291
- US-A- 4 664 754
- PATENT ABSTRACTS OF JAPAN vol. 014, no. 271 (M-0983)12. Juni 1990 & JP-A-20 78 552 (DAINIPPON PRINTING CO LTD) 19. März 1990
- PATENT ABSTRACTS OF JAPAN vol. 012, no. 372 (C-533)5. Oktober 1988 & JP-A-63 119 808 (ASAHI CHEM IND CO LTD)

## Beschreibung

Die Erfindung betrifft eine Vorrichtung zum Waschen eines Zylinders einer Druckmaschine mit Hilfe einer Wascheinrichtung, vorzugsweise einer Waschwalze, der in einem Kreislauf ein Waschmittel zugeführt wird, das Wasser und Lösemittel enthält, wobei zum Reinigen des verbrauchten Waschmittels in dem Kreislauf hinter der Wascheinrichtung ein Destillationsgerät für das Waschmittel vorgesehen ist, dessen Destillat dem Einlaß der Wascheinrichtung wieder zugeführt wird.

Eine derartige Vorrichtung hat sich an und für sich bewährt. Sie ist in der deutschen Patentanmeldung P 41 16 762.7-27 der Anmelderin vom 23. Mai 1991 beschrieben. Verglichen mit anderen bekannten Waschvorrichtungen zeichnet sich diese Waschvorrichtung insbesondere dadurch aus, daß die Waschflüssigkeit in einem Kreislauf geführt und somit wieder verwendet wird. In der verbrauchten Waschflüssigkeit enthaltene Farbstoffpartikel werden im Destillationsgerät eingedickt und können problemlos als Industriemüll von Zeit zu Zeit entsorgt werden, wobei darüber hinaus nur geringe Mengen Müll anfallen.

Versuche mit der Anlage, wie sie in der vorstehend erläuterten älteren Patentanmeldung der Anmlederin beschrieben worden sind, haben ergeben, daß das Destillat nicht homogen ist; je nach den Bedingungen im Destillationsgerät fallen vielmehr nacheinander Wasser und Lösungsmittel an. Das Destillat wird anschließend der eigentlichen Wascheinrichtung wieder zugeführt und dies ist ohne weitere Maßnahmen nicht möglich, weil das Destillat, wie erwähnt, nicht als homogenes Gemisch an Waschflüssigkeit anfällt.

Eine weitere Waschvorrichtung ist aus der EP-A-0 186 193 für ein Tiefdrucksystem bekannt. Diese Vorrichtung besitzt u.a. auch einen Destillierbehälter, ausschließlich für das Lösungsmittel, sowie eine Auffangeinrichtung für die Rückstände.

Aus der US-PS 4 317 720 ist ein Rückgewinnungseinrichtung für die Reinigungsflüssigkeit bekannt. Die Einrichtung ist u.a. derart ausgebildet, daß Rückstände wie Schlamm und Schmutz gesammelt werden.

Gemäß der EP-A-0 419 289 ist eine Reinigungseinrichtung mit einer Waschbürste bekannt, die als Reinigungsflüssigkeit ein Gemisch von Lösungsmittel und Wasser als Emulsion verwendet.

Ausgehend von diesem Stand der Technik liegt daher der Erfindung die Aufgabe zugrunde, eine Vorrichtung mit den Merkmalen des Oberbegriffes von Patentanspruch 1 vorzuschlagen, die das Waschmittel von seinen festen Verunreinigungen trennt und danach das Waschmittel in die Bestandteile Wasser und Lösungsmittel aufbereitet und so der eigentlichen Wascheinrichtung wieder zugeführt werden kann um dort von neuem zum Waschen des Zylinders der Druckmaschine zu dienen.

Zur Lösung dieser Aufgabe ist die Erfindung dadurch gekennzeichnet, daß dem Destillationsgerät ein Schwerkraftscheider nachgeschaltet ist, der das Destillat in Wasser und in Lösemittel trennt, die getrennt und nacheinander zum Einlaß der Wascheinrichtung geleitet werden.

Es wurde somit überraschend gefunden, daß die angegebenen Maßnahmen das geschilderte Problem in einwandfreier Weise lösen und zudem mit geringem zusätzlichen apparativen Aufwand. Man verzichtet nämlich auf den an und für sich auch möglichen Weg, das Destillat zu emulgieren und geht den dazu gerade entgegengesetzten Weg, nämlich das Destillat in seine beiden Bestandteile zu trennen. Diese beiden getrennten Bestandteile werden dann getrennt der eigentlichen Wascheinrichtung zugeleitet. Versuche haben gezeigt, daß gerade diese getrennte Anwendung der beiden Bestandteile - Wasser und Lösemittel - zu einem hervorragenden Wasch- und Reinigungsergebenis führt.

Von der apparativen Seite ist lediglich der zusätzliche Schwerkraftscheider notwendig, der im Grunde aus einem geeigneten, möglichst großvolumigen Gefäß besteht, in dem sich die beiden Bestandteile - Wasser und Lösemittel - durch Schwerkraft voneinander trennen. Sie werden dann in entsprechende Vorratsgefäße abgefüllt, die an den Ausgang des Schwerkraftscheiders angeschlossen sind.

Dieser besteht vorzugsweise aus durchsichtigem Material (Silikatglas oder Kunststoffglas), wobei man dann optisch die Trennlinie zwischen den beiden Bestandteilen sieht und die Umschaltung am Ausgang des Trennbehälters zu dem jeweiligen Vorratsbehälter für das betreffende Medium vornehmen kann, sobald die Trennlinie zum Ausgang des Trennbehälters gewandert ist. Es ist aber auch möglich, den Trennbehälter (Schwerkraftscheider) aus anderen geeigneten Materialien zu fertigen, beispielsweise aus Stahl.

Das Destillat kann dem Schwerkraftscheider über einen Zwischenbehälter zugeleitet werden, der gewissermaßen als Puffer für das Destillat dient.

Aus demselben Grunde ist es vorteilhaft, wenn dem Destillationsgerät ein Sammelbehälter für das verschmutzte Waschmittel vorgeschaltet ist.

Apparativ sieht man für die getrennte Anwendung der beiden Medien an der Waschwalze vor, daß an den Ausgang des Schwerkraftscheiders getrennte Vorratsbehälter für das Wasser bzw. für das Lösemittel angeschlossen sind, die über ein Stellventil an den Eingang der Wascheinrichtung angeschlossen sind.

Außerdem ist eine Steuerung für die Volumina an Waschmittel in den Sammelbehältern vorgesehen, so daß die gesamte Anlage einwandfrei funktioniert.

Wenn eine Mehrfarben-Druckmaschine mit der erfindungsgemäßen Reinigungsvorrichtung ausgerüstet werden soll, so genügt eine einzige Reinigungsvorrichtung für alle Druckwerke der Mehrfarben-Druckmaschine.

Die erfindungsgemäße Vorrichtung ist insbesondere für Bogendruckmaschinen geeignet, weil hier, verglichen mit Rollendruckmaschinen, fühlbar kleinere Mengen an Waschflüssigkeit anfallen.

Die Erfindung wird im folgenden anhand eines Ausführungsbeispiels näher erläutert, aus dem sich weitere wichtige Merkmale ergeben. Die Figur zeigt schematisch eine Mehrfarben-Bogendruckmaschine mit einer jedem Druckwerk zugeordneten Wascheinrichtung, wobei allen Wascheinrichtungen eine erfindungsgemäße Vorrichtung zum Reinigen und Trennen der in einem Kreislauf geführten Waschflüssigkeit zugeordnet ist.

Im oberen Teil der Figur ist eine Mehrfarben-Bogendruckmaschine gezeigt, deren Druckwerke bei Position 1 angedeutet sind. Die Zylinder der Druckwerke werden mit Hilfe einer Wascheinrichtung gewaschen, wie sie an sich bekannt ist. Vorzugsweise besteht die Wascheinrichtung aus einer Waschwalze, die an den zu reinigenden Zylinder angestellt werden kann und deren Umfang über eine Sprühdüse Waschwasser zugeführt werden kann. Die Waschwalze befindet sich in einer geeigneten Wanne mit einem Auslauf für das verbrauchte Waschwasser.

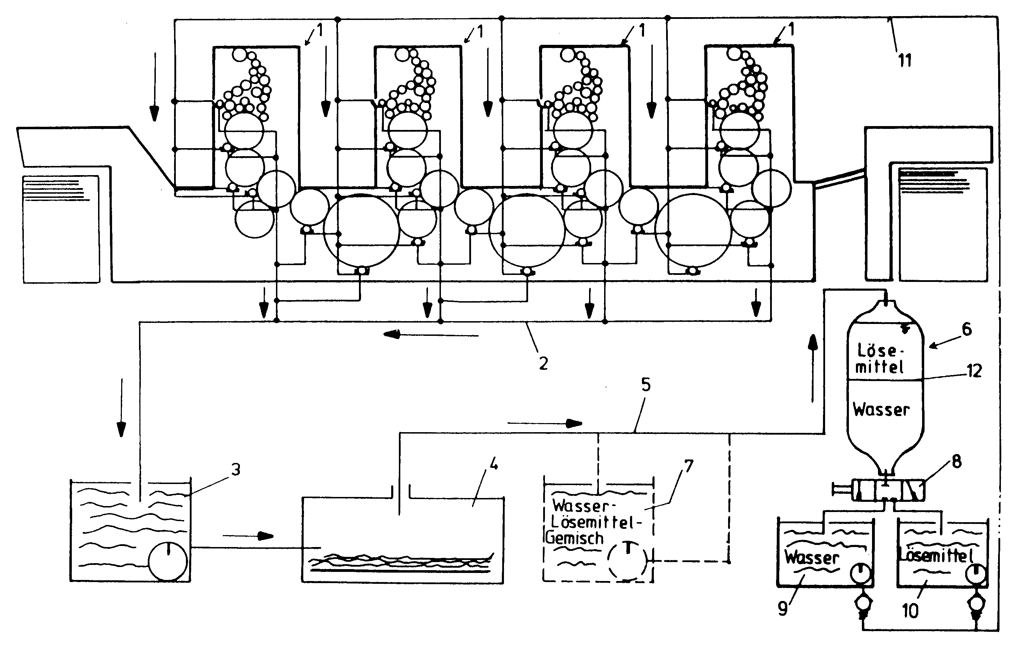

Einzelheiten einer derartigen Wascheinrichtung sind beispielsweise in Figur 1 der eingangs erwähnten älteren Patentanmeldung P 41 16 762.7-27 gezeigt.

Die Ausgänge der einzelnen Wascheinrichtungen sind an eine gemeinsame Leitung 2 angeschlossen, die in einen Ablaufbehälter mündet. An den Ablaufbehälter ist ein Destillationsgerät 4 angeschlossen. Das Destillat gelangt über eine Leitung 5 entweder direkt zu einem Schwerkraftscheider 6 oder über einen zwischengeschalteten Destillatbehälter 7.

Am Ausgang des Schwerkraftscheiders 6 ist ein Ventil 8 vorgesehen, über das das getrennte Destillat entweder in einen Vorratsbehälter 9 für Wasser oder in einen Vorratsbehälter 10 für Lösemittel gelangt.

Die Vorratsbehälter 9, 10 sind über Rückschlagventile an eine Leitung 11 angeschlossen, die das gereinigte und getrennte Waschmittel wieder den einzelenen Druckwerken 1 zuleitet.

Der Schwerkraftscheider 6 besteht aus einem vorzugsweisen durchsichtigem Gefäß geeigneter Größe, in dem sich das Destillat in seine beiden Bestandteile mit Hilfe von Schwerkraft trennt, nämlich in Wasser und Lösemittel. Zwischen diesen beiden Bestandteilen verläuft eine Trennlinie 12.

Pumpen und eine geeignete Steuerung sind vorgesehen, die für einen einwandfreien Betrieb der Waschvorrichtung mitsamt der Reinigungs- und Trennvorrichtung sorgen.

Im Betrieb gelangt verschmutztes Waschmittel in den Ablaufbehälter 3 und von dort in das Destillationsgerät 4, von wo das Destillat (Wasser und Lösemittel) direkt oder über den Behälter 7 in den Schwerkraftscheider 6 gelangen. Dort erfolgt die Trennung des Destillats in die beiden Bestandteile, nachdem das verschmutzte Waschmittel im Destillationsgerät 4 vorher gereinigt worden war. Im Destillationsgerät 4 werden die im verschmutzten Waschmittel schwebenden Farbpartikel und andere feste Verunreinigungen zu einem Schlamm verdickt, der von Zeit zu Zeit als Industriemüll entsorgt werden muß. Es sei bemerkt, daß nur verhältnismäßig geringe Mengen an zu entsorgendem Farbschlamm anfallen. Das Destillationsgerät 4 wird auf geeignete Art und Weise beheizt, so daß Lösemittel und Wasser als Destillat anfallen und, wie erwähnt, zum Schwerkraftscheider 6 gelangen.

Wenn sich die beiden Bestandteile im Schwerkraftscheider getrennt haben, so wird zunächst das schwerere Wasser durch Betätigung des Ventils 8 in den Behälter 9 abgelassen und anschließend das leichtere Lösemittel in den Lösemittelbehälter 10. Aus diesen Behältern 9, 10 werden dann das Wasser und das Lösemittel durch Betätigung von diesen Behältern zugeordneten Pumpen nacheinander in die Leitung 11 und von dort zu den Wascheinrichtungen der Druckwerke gegeben, die dadurch gereinigt werden.

Im allgemeinen besprüht man die Waschwalze der Wascheinrichtung einige Sekunden lang mit Lösemittel und anschließend ebenfalls einige Sekunden lang mit Wasser und so fort. Das Lösemittel löst die anhaftenden Schmutz- und Farbteilchen und das Wasser sorgt für deren Abtransport.

## Patentansprüche

1. Vorrichtung zum Waschen eines Zylinders einer Druckmaschine mit Hilfe einer Wascheinrichtung, vorzugsweise einer Waschwalze, der in einem Kreislauf ein Wasser und Lösungsmittel enthaltendes Waschmittel zugeführt wird, wobei zum Reinigen des verbrauchten Waschmittels in dem Kreislauf hinter der Wascheinrichtung ein Destillationsgerät (4) zum Trennen der festen Verunreinigungen des Waschmittels vorgesehen ist, dessen Destillat dem Einlaß der Wascheinrichtung wieder zugeführt wird,
**dadurch gekennzeichnet**,
daß dem Destillationsgerät (4) zur Trennung eines inhomogenen Waschmittel-Destillates in Wasser und in Lösemittel ein Schwerkraftscheider (6) nachgeordnet ist und die abgeschiedenen Flüssigkeiten Wasser und Lösemittel getrennt und nacheinander zum Einlas der Wascheinrichtung geleitet werden.

2. Vorrichtung nach Anspruch 1,
**dadurch gekennzeichnet,**
daß das Destillat dem Schwerkraftscheider (6) über einen Zwischenbehälter (7) zugeleitet wird.

3. Vorrichtung nach Anspruch 1 oder 2,
**dadurch gekennzeichnet,**
daß dem Destillationsgerät (4) ein Sammelbehälter (3) für das verschmutzte Waschmittel vorgeschaltet ist.

4. Vorrichtung nach einem der Ansprüche 1 bis 3,
**dadurch gekennzeichnet,**
daß an den Ausgang des Schuerkraftscheiders (6) getrennte Vorratsbehälter (9, 10) für das Wasser bzw. für das Lösemittel angeschlossen sind.

5. Vorrichtung nach einem der Ansprüche 1 bis 4,
**dadurch gekennzeichnet,**
daß der Schwerkraftscheider (6) aus durchsichtigem Material besteht.

6. Vorrichtung nach einem der Ansprüche 1 bis 5,
**dadurch gekennzeichnet,**
daß eine Steuerung für die Volumina an Waschmittel in den Sammelbehältern (3, 6, 7) vorgesehen ist.

7. Vorrichtung nach einem der Ansprüche 1 bis 6,
**dadurch gekennzeichnet,**
daß die Reinigungsvorrichtung allen Druckwerken (1) einer Mehrfarben-Druckmaschine zugeordnet ist.

8. Vorrichtung nach einem der Ansprüche 1 bis 7,
daß die Druckmaschine als Bogendruckmaschine ausgebildet ist.

## Claims

1. Device for cleaning a cylinder of a printing machine with the aid of a cleaning unit, preferably a cleaning roller, to which in a circuit a cleaning agent containing water and solvent is fed, wherein for cleaning the used cleaning agent in the circuit after the cleaning unit a distillation device (4) is provided for separating the solid contaminants of the cleaning agent, the distillate from which is fed back again to the inlet of the cleaning unit characterised in that after the distillation device (4) a gravity separator (6) is arranged to separate an inhomogeneous cleaning agent distillate into water and into solvent and the separated liquids water and solvent are fed separately and successively to the inlet of the cleaning unit.

2. Device according to Claim 1, characterised in that the distillate is fed to the gravity separator (6) via an intermediate container (7).

3. Device according to Claim 1 or 2, characterised in that arranged prior to the distillation device (4) is a collection container (3) for the contaminated cleaning agent.

4. Device according to one of Claims 1 to 3,
characterised in that separate storage containers (9, 10) for the water or for the solvent respectively are connected to the outlet of the gravity separator (6).

5. Device according to one of Claims 1 to 4,
characterised in that the gravity separator (6) consists of transparent material.

6. Device according to one of Claims 1 to 5,
characterised in that a control is provided for the volume of cleaning agent in the collecting containers (3, 6, 7).

7. Device according to one of Claims 1 to 6,
characterised in that the cleaning device is arranged for all print units (1) of a multi-colour printing machine.

8. Device according to one of Claims 1 to 7,
characterised in that the printing machine is constructed as a sheet printing machine.

## Revendications

1. Dispositif pour nettoyer un cylindre d'une machine d'impression à l'aide d'un moyen de nettoyage, avantageusement un rouleau de nettoyage, auquel, dans un circuit, un agent de nettoyage comportant de l'eau et un solvant est amené, un appareil de distillation (4) pour séparer les impuretés solides de l'agent de nettoyage étant prévu pour purifier l'agent de nettoyage consommé dans le circuit derrière le moyen de nettoyage, dont le distillat est ramené à l'entrée du moyen de nettoyage,
caractérisé en ce qu'un séparateur par gravité (6) est agencé en aval de l'appareil de distillation (4), pour séparer un distillat non homogène de l'agent de nettoyage en eau et en solvant, et les liquides séparés, eau et solvant, sont amenés, de façon séparée et successive, à l'entrée du moyen de nettoyage.

2. Dispositif selon la revendication 1,
caractérisé en ce que le distillat est amené au séparateur par gravité (6) en passant par un récipient intermédiaire (7).

3. Dispositif selon la revendication 1 ou 2,
caractérisé en ce qu'un récipient de collecte (3) pour l'agent de lavage pollué est prévu en amont de l'appareil de distillation (4).

4. Dispositif selon une des revendications 1 à 3,
caractérisé en ce que des réservoirs séparés (9,10) pour l'eau et pour le solvant sont raccordés à la sortie du séparateur par gravité (6).

5. Dispositif selon une des revendications 1 à 4,
caractérisé en ce que le séparateur par gravité (6) est constitué d'une matière transparente.

6. Dispositif selon une des revendications 1 à 5,
caractérisé en ce qu'une commande pour les volumes d'agent de nettoyage dans les réservoirs (3,6,7) est prévue.

7. Dispositif selon une des revendications 1 à 6,
caractérisé en ce que le dispositif de nettoyage est associé à toutes les unités d'impression (1) d'une machine d'impression en plusieurs couleurs.

8. Dispositif selon une des revendications 1 à 7,
caractérisé en ce que la machine d'impression est réalisée sous forme de machine d'impression à feuilles.
